# EUROPEAN PATENT SPECIFICATION

(11) **EP 1 962 544 B1**
(45) Date of publication and mention of the grant of the patent: **06.04.2011**
(21) Application number: 07290234.9
(22) Date of filing: 20.02.2007
(51) Int. Cl.: H04Q 11/04

(54) **An access node and method for reliable bonding of subscriber lines**
Zugangsknoten und Verfahren zum verlässlichen Bonding von Teilnehmeranschlüssen
Noeud d'accès et procédé de liaison fiable des lignes d'un abonné

(43) Date of publication of application: 27.08.2008
(73) Proprietor: Alcatel Lucent, 75008 Paris (FR)
(72) Inventor: Pauwels, Bart Joseph Gerard, 3980 Tessenderlo (BE); Taildeman, Geert René, 9860 Oosterzele (BE)
(74) Representative: Anderlini, Alain

(56) References cited:
- EP-A- 1 009 154
- EP-A- 1 045 610
- WO-A-2005/094052
- GB-A- 2 364 199
- KR-A- 20050 117 885

## Description

### Field of the Invention

The present invention generally relates to increasing the reliability for bonded subscriber lines or bonded subscriber loops. Subscriber line bonding allows multiple subscriber lines, e.g. two or more twisted copper pairs configured for xDSL (any type of Digital Subscriber Line) services, to be electronically grouped together in order to provide greater bandwidth over a single logical connection over a given physical distance to a subscriber, or in order to increase the allowed distance between access node equipment and subscribers that require a given service bandwidth. Multiple physical lines (subscriber loops) like for instance multiple copper telephone lines, or multiple unchannelized circuits like for instance multiple unchannelized T1 or E1 circuits can be bonded together to provide business or residential subscribers with increased bandwidth for a single ATM (Asynchronous Transfer Mode) connection or a single Ethernet connection. The bandwidth of the bonded subscriber lines is aggregated invisibly to the subscriber, such that the subscriber only realizes an increase in the bit rate or bandwidth over a given geographical distance.

The offering of services over DSL loops, for instance Asymmetric Digital Subscriber Line (ADSL) loops, Symmetric Digital Subscriber Line (SDSL) loops or Very High Speed Digital Subscriber Line (VDSL) loops, is moving from Internet access towards triple play services. Triple play services, i.e. concurrent delivery of voice, video and broadband Internet services, have intensified the demand for increased bandwidth on subscriber lines. The bandwidth required for triple play services, typically in the range of 20 to 30 Mbps (Megabits per second), can be achieved through line bonding. Such line bonding technology is currently available for DSL lines and T1/E1 access technologies, but applicability of the present invention is of course not restricted to any particular type of subscriber line and certainly does not depend on nowadays availability of a standardized or proprietary bonding technology thereon.

Also as a result of the deployment of triple play services, the operators demand for increased reliability and availability of the network and equipment delivering these services is rising. Today, data traffic is typically protected in large parts of the core and edge networks through link protection, intra- and inter network node redundancy, network management and traffic re-routing mechanisms. In an access node constituting the last stage connecting with the customer premises equipment, e.g. a Digital Subscriber Line Access Multiplexer (DSLAM), a Remote Unit (RU), a Neighbouring Unit (NU), a mini-DSLAM, a Digital Loop Carrier (DLC), etc., central system functions such as the powering, the switch fabric, the control and management, as well as the uplinks or network termination boards towards the edge or aggregation network are protected through redundancy. The line terminations in such an access node, i.e. the boards that host the interfaces to the subscriber lines, however still constitute a weak element in the reliability of the communication equipment chain since they are not well protected against failures.

In the near future, the demand for increased reliability shall further rise because the number of subscriber lines that is terminated by a single line termination board is steadily increasing. Today, a single line termination board typically hosts 12 to 96 subscriber line interfaces, but soon the number of subscriber lines terminated by a single line termination board in the access node shall surpass the number for which it is no longer acceptable to operators to be put out of service as a result of a single failure, e.g. a line termination board failure in a DSLAM. Some form of line termination board protection will become imperative. The current invention concerns an advantageous way to protect bonded subscriber lines in case of such a line termination board failure.

The increasing number of subscriber lines terminated on a single line termination, and consequently the increasing number of subscriber lines terminated on a single access node poses another problem which is the processing scalability in the access nodes.

### Background of the Invention

The ITU-T Study Group 15 has developed three DSL standard specifications for bonding together DSL links. The bonding techniques described therein generally can be classified in two categories. On the one hand, ITU-T Standard Specification G.998.3 describes multi-pair bonding using time division inverse multiplexing. This bonding technology based on inverse multiplexing alternately assigns ATM cells to the different subscriber lines that constitute a bonding group. On the other hand, ITU-T Standard Specifications G.998.1 and G.998.2 respectively describe ATM-based multi-pair bonding and Ethernet-based multi-pair bonding wherein assignment of the ATM cells or Ethernet frames is based on the availability of the different subscriber lines that constitute a bonding group. It is noticed here that the current invention applies to the second category of bonding techniques, which does not spread the cells, frames or data packets in a predetermined manner over the subscriber lines that constitute a bonding group. In other words, the current invention aims at increasing the reliability of subscriber access installations which apply line bonding techniques that divide the traffic over the bonded subscriber lines depending on the actual availability of these lines, and in particular addresses the situation where the bonded subscriber lines terminate on multiple line termination boards in the access node.

The line termination (LT) boards in the access node, typically organized in a shelf, may be protected through so called 1:N redundancy. In this case, the N'th line termination board is a spare board used for replacing any of the N-1 operational line termination boards in case of failure. Apart from provisioning a spare LT board per N LT boards in the shelf, this prior art solution requires the presence of a protection switch in front of the LT board shelf, enabling to switch all the subscriber lines terminated by any of the LT boards in the shelf to the spare LT board that is kept in stand-by, in case the original board fails. Such a protection switch can for instance be realized through relays on the splitter boards associated with the LT board shelf and a dedicated back plane protection bus, in case of a splitter-based access node, e.g. a DSLAM with integrated POTS splitters. If the protection switch is realized this way, the splitter boards can no longer remain passive, but require powering and a minimal active control. Alternatively, the protection switch can be realized through an automatic main distribution frame (MDF), i.e. a protection switch between the access node's network ports and the subscriber line interfaces on the LT boards. Such main distribution frame however requires central fault detection and protection switch control means, as well as initialisation and configuration tools for configuring the spare LT board with the appropriate static and possibly even dynamic configuration data that apply to the subscribers served by the failing LT board. Also, such arrangement does not protect the physical DSL cabling across the distance between the access node and the subscriber premises.

Summarizing, the prior art protection mechanism based on 1:N redundancy requires active and controlled splitter boards or an automatic main distribution frame, which both significantly increase the complexity of the access node and the cost per line. In addition, switching from a failing LT board to the spare LT board typically causes a time-out resulting in service interruptions which may no longer be acceptable when a single LT board continues to serve increasing numbers of subscribers. In most cases, only static configuration information can be restored on the spare LT board. Protection switching control and context restoration would require a dedicated protection application in the access node's control and management, which would have a further negative impact on the complexity and cost per line.

A second prior art protection mechanism for LT board failures in access nodes is known as 1:1 redundancy. In this case, the LT board shelf contains a spare LT board for each operational LT board. Although switching from a failing LT board to the spare LT boards may be simplified in comparison with the solution based on 1:N redundancy, this second prior art solution still requires the presence of a protection switch in front of each LT board pair, covering all subscriber lines terminated by the active LT board. Such a protection switch can again be realized through relays on an eventual splitter board associated with the LT board pair and a dedicated back plane protection interconnection, introducing similar disadvantages as mentioned above: the splitter boards must be powered and require active control. Alternatively, an automatic main distribution frame can be relied upon, or the LT board protection switch functionality may be shifted towards the customer premises equipment (CPE) in another variant of 1:1 LT board redundancy where dual interfaces are provided to the subscriber. The latter variant however requires the availability of CPE modems with a dual interface and protection switch, which are currently not available, and not foreseeable in the near future.

The 1:1 redundancy protection basically suffers from the same drawbacks as 1:N redundancy protection. The necessity of a protection switch increases the complexity of the access node and the cost per line, whereas the alternative scenario relies on the availability of enhanced CPE modems which is unlikely to happen. In addition thereto, 1:1 redundancy nearly doubles the hardware space and costs due to the duplication of the LT boards and related connectivity to the network termination (NT) board(s) that aggregate the traffic. Compared to 1:N redundancy, conservation of dynamic configuration data is more realistic such that service outage time and inconvenience to the subscriber may be expected to be reduced. Again however, such arrangement does not protect the physical DSL cabling across the distance between the access node and the subscriber premises.

A third prior art protection mechanism for LT board failures is inherent to the above cited flavour of multi-pair bonding of subscriber lines wherein the data packets, frames, fragments thereof or cells are assigned to the lines based on the availability of these lines. Inherent to such implementation of bonding, the traffic will be assigned to the remaining, available lines of the bonding group, when certain lines are affected by failures. This arrangement can be configured to protect effectively against DSL cable failures. An example of such multi-pair bonding system is described in European Patent Application EP 1 009 154 from Lucent Technologies, entitled "Dynamic Configuration of Digital Subscriber Line Channels". More particularly Fig. 5, Fig. 6 and the corresponding paragraphs [0035] - [0039] thereof, describe bonding of DSL lines 545 and 550 that are terminated on a single line termination 505 in an access node. In case of a failure on one or more of the communication lines 545 or 550, the bonding function 515 on the line termination 505 shall dynamically adjust the upstream/downstream bandwidth on the remaining line(s) in order to preserve upstream/downstream symmetry at a reduced overall rate. This is explained in column 15, lines 21-28, and an example situation wherein communication line 545 is supposed to fail, is described in paragraph [0038] of EP 1 009 154. Similarly, the International Patent Application WO 2005/094052, entitled "High Speed Multiple Loop DSL System" describes multi-pair DSL bonding and on page 8, lines 19-25 thereof, reference is made to the inherent automated traffic balancing and provision of redundancy in the event of a line failure. Yet it is to be noticed in turn that bonding of subscriber lines of which the traffic is processed by a single bonding function, e.g. lines that terminate on the same multi-line ASIC or on the same LT board obviously does not provide protection against LT board failures. When an unprotected LT board fails, all subscriber lines that constitute a bonding group that is processed by this LT will be affected, hence no survival of the connection. Bonding of subscriber lines that terminate on different LT boards can be implemented in a centralized way as is suggested in ITU-T Study Group 15 Standard Contribution CD-003 entitled "Proposal for discovery at the bonding layer rather than G.hs layer" and ITU-T Study Group 15 Standard Contribution PF-053 entitled "G.bond: Report of Progress on Bonding in T1E1.4". In such centralized bonding implementation, a single bonding function in the access node, for instance on the network termination (NT) board, has to handle all traffic from all bonded subscriber lines. Although redundancy may be built into the centralized architecture for bonding, such centralized implementation usually puts restrictions to the amount of subscriber lines that can be bonded. The bonding capacity in other words tends to be limited, which corresponds to a scalability problem of the centralized bonding architecture suggested in the prior art.

It is an objective of the present invention to provide an access node that supports subscriber line bonding with increased scalability and reliability over the prior art solutions. More particularly, the present invention aims to disclose an access node wherein a bonding group constituted of subscriber lines that terminate on multiple line termination boards, is protected against an LT board failure with limited additional complexity and at no or negligible additional cost in comparison to the known redundancy based prior art protection mechanisms and the known centralized bonding architecture. It is further an objective to increase the availability of bonding groups and to enable fast restoration of part of the traffic belonging to a bonding group in case of an LT board failure.

### Summary of the Invention

According to the invention, the above objectives are realized and the shortcomings of the different prior art solutions discussed above are overcome by the access node defined in claim 1, comprising a network termination, a first line termination and at least a second line termination, the first line termination providing connectivity to a terminal via a first subscriber line, and the second line termination providing connectivity to the same terminal via a second subscriber line. The first subscriber line and the second subscriber line are member lines of a same bonding group. The first line termination comprises a first bonding function adapted to assume master bonding operation, i.e. execution of the PME Aggregation Functions (PAF) as defined in the bonding standards, for the bonding group whereas the second line termination comprises a second bonding function adapted to assume slave bonding operation, i.e. mere physical DSL line termination and data (de-)encapsulation functions for transfer to/from the bonding master function, for the bonding group. The first line termination can be disabled, removed or replaced, and the second bonding function has sufficient processing capacity and is configured to take over the master bonding operation from the first bonding function in case the first line termination is disabled, removed or replaced. For a given subscriber interface, one of both bonding functions (the bonding master) performs the actual aggregation processing of bonded traffic in both directions. This includes the operations described in the standard IEEE 802.3 ah clause 61, for PME Aggregation. The other bonding function (the bonding slave) performs the transfer and conversion of Protocol Data Units (PDUs) as applicable for the DSL line(s) that it controls on the one hand, and the communication with the bonding master on the other hand. By spreading the bonding function over the different line termination cards that terminate bonded subscriber lines, the current invention to a large extent resolves the scalability problem of the known centralized bonding function. The bonded line traffic can be passed from/to the LT board(s) that host member DSL lines and bonding slave functions for the subscriber interface, to/from the LT board that host the bonding master function for the subscriber interface, either via the backbone and switch fabric of the access node, or alternatively via a dedicated interface between the LT boards, as will be explained in more detail below. The LT board that performs the bonding slave function for a given subscriber interface contains all necessary resources and processing means to perform the bonding master function for the DSL line(s) it controls, in case the actual bonding master function for this subscriber, on another LT board, is detected to fail. The first and second bonding functions can be logically disabled or physically removed or replaced without affecting the operation or the capabilities of the other bonding function. The first and second bonding function can take over the operation mode of the other in case the other is logically disabled or physically removed or replaced, and was performing the principal bonding functions for the affected subscriber interfaces. As a result, service outage as a consequence of an LT board failure can be avoided.

The invention does not rely on 1:N or 1:1 LT board redundancy. No equipment or capacity in the access node is left unused. The invention also does not rely on dedicated hardware provisioning at the central office or customer premises side. As a result, the current invention is less complex and less expensive than the prior art solutions. Further, the additional costs for high availability of bonded subscriber lines, i.e. the cost of a bonding CPE modem and the cost for access to multiple ports of the access node, thanks to the invention shall be borne only by the subscribers that need it. In other words, the invention introduces a selective cost increase for protection of high end subscribers only, and subscribers that do not need high availability and extra bandwidth can still be connected efficiently to the access node through a single subscriber line.

In addition to the access node defined by claim 1, the current invention relates to a corresponding method for bonding a first subscriber line and at least a second subscriber as defined by claim 13.

An optional aspect of the access node and method according to the present invention, defined by claims 2 and 14, is that the first and second bonding functions may comprise respective synchronization interfaces for sharing bonding configuration data concerning that bonding group, and means for synchronizing a configuration change in the first and second bonding functions, in order to allow fast and accurate take-over in case of failure.

Thus, the bonding group configuration data for bonded lines that are distributed over multiple LT boards may be shared and synchronized via a dedicated interface on the bonding functions. As a result, in case of failure of one of the LT boards, the remaining LT boards change their role for all subscriber lines for which the failing LT board has the master bonding function, from a bonding slave function into a bonding master function using the synchronized configuration data. Since the synchronized bonding configuration data are permanently available, the solution according to the present invention with synchronization interface has the potential to provide a very fast switch over. In the most simple case, where a single bonding group consists of two subscriber lines terminated on different LT boards, the first LT board being the bonding master at an instant where it fails, the second LT board shall change its role from bonding slave to bonding master using the synchronized bonding configuration data that were regularly shared according to the present invention between the bonding functions on the first and second LT boards via the dedicated synchronization interface. The synchronization of the bonding group configuration data and the changing of roles from bonding slave to bonding master may be done through a dedicated software application, or alternatively can be implemented in the bonding function's hardware, e.g. as part of an ASIC, or in the related firmware.

As an alternative to the synchronization interface, the bonding functions on the different line termination boards may be configured at initialisation of a bonding group in such a way that they can at any time take over each other's operation, thereby relying on the initial configuration information. This way, an LT board can immediately take-over the bonding responsibilities for affected subscriber interfaces of another LT board when the latter is disabled, removed or replaced at a point in time where it is performing the principal bonding functions.

An optional feature of the access node according to the present invention, defined by claim 3, is that the first and second bonding functions may further comprise respective data interfaces for sharing data packets to be transferred to or received from the subscriber terminal through member lines of the bonding group of subscriber lines during normal operation.

Indeed, in case of an LT board failure, the bonding master function shall be assumed by the remaining LT board (or one of the remaining LT boards in case the bonded lines are terminated on more than 2 LT boards). In addition, the traffic passing through both or all LT boards that provide member lines of a bonding group must be passed to/from the LT board hosting the bonding master function under normal conditions.

In one embodiment of the invention, defined by claim 4, passing the bonded line traffic from the bonding slave LT boards to the bonding master is done through the back plane and switch fabric of the access node, using the existing LT board hardware. In a second, more efficient embodiment of the invention, defined by claim 3, the bonded line traffic is passed from the bonding slave LT boards to the bonding master through a dedicated data interface between both or more LT boards. This second embodiment requires additional cabling between the LT boards and consequently is only a viable option when the LT boards whose subscriber lines are bonded are physical neighbours in the rack. The main advantage of this second embodiment is that the user data communication between bonding master and bonding slave functions does not impact the load on the backplane. In case of failure of an LT board that provides one or more member lines of the bonding group, the part of the bonding group traffic path running through these member lines, this LT board and its optional data interface to other LT boards, disappears altogether.

Optionally, as defined by claims 5 and 6, the synchronization interface according to the present invention can be implemented through a FastEthernet or a processor interface.

Another optional feature of the access node according to the present invention is that the first and second bonding functions further comprise respective bonding configuration memories for storing the bonding configuration data received via the synchronization interface. This feature is defined by claim 7.

This way, the synchronized bonding configuration data remain stored in or near the bonding functions to be fast accessible in case of an LT board failure.

A further, optional feature of the access node according to the present invention, defined by claim 8, is that the first and second bonding functions comprise means for detecting a failure.

Indeed, in order to detect an LT board failure quickly, the bonding functions advantageously have the capability to monitor the status of the LT board(s) with whom it participates in maintaining bonding groups. As soon as one of these LT board(s) fails, it will be detected by the bonding function that can take over the bonding master responsibility for the different bonding groups whose master function was hosted by the failing board.

Optionally, as defined by claim 9, the means for detecting a failure may comprise means for transferring a heartbeat between the first and second line terminals.

Such heartbeat signal may be transferred between the LT boards via a connection through the backplane, as is indicated by claim 10. In a faster implementation, the heartbeat signals are transferred directly between the LT boards via a control or signalling channel, as is indicated by claim 11. A specific instantiation of the latter implementation is where the synchronization interface, i.e. the interface on the bonding functions that according to the present invention is used to transfer the synchronized bonding configuration data, is used for transfer of the heartbeat signals between the bonding functions on different LT boards. The latter specific instantiation is defined by claim 12.

### Brief Description of the Drawings

Fig. 1 is a diagram illustrating the connectivity between an access node and customer premises equipment through bonded subscriber lines;
Fig. 2 is a block diagram illustrating a first embodiment of the access node according to the present invention;
Fig. 3 illustrates the operation at LT board failure in a second embodiment of the access node according to the present invention; and
Fig. 4 illustrates the operation at LT board failure in the first embodiment of the access node according to the present invention.

### Detailed Description of Embodiment(s)

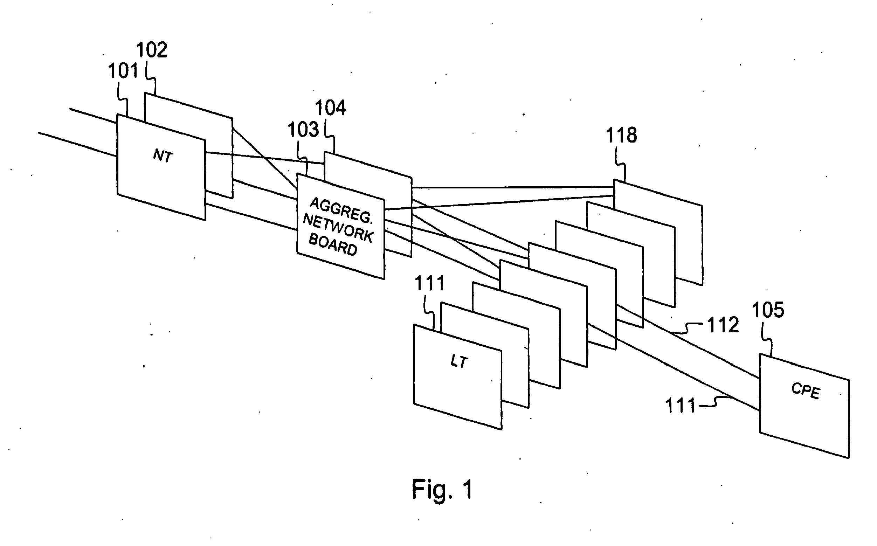

Fig. 1 shows the typical arrangement of a DSLAM network node with connectivity between two network termination boards or NTs, 101 and 102, two aggregation network boards, 103 and 104, and plural line termination boards or LTs, 111 to 118, providing full protection through redundancy from the network up to the line termination boards, 111 to 118. Thus, in case an NT board fails, for instance NT 101, the second NT board 102 shall take over the functionality of the failing NT board 101. Consequently, the upstream traffic coming from aggregation boards 103 and 104 shall be forwarded to NT board 102 until NT board 101 is brought to operation again, and also all downstream traffic that arrives at the DSLAM shall be handled by NT board 102 until NT board 101 is operating again. In a similar fashion, the aggregation network boards 103 and 104 are configured and interconnected with the NT boards and the LT boards in such a way that the traffic can entirely be routed through either aggregation network board 103 or aggregation network board 104 in case one of them fails.

Fig. 1 further shows bonding of two DSL subscriber lines 111 and 112 towards a customer premises equipment modem, CPE 105. The two DSL lines 111 and 112 that constitute a single bonding group are terminated by different LT boards in the DSLAM. These LT boards whereon the subscriber lines of a single bonding group are terminated are preferably but not necessarily physically neighbouring cards on the DSLAM shelf. Further, the DSL line interfaces that terminate subscriber lines that form part of a single bonding group preferably but not necessarily occupy physically matching positions on the different LT boards.

In case of bonding where the subscriber lines that form part of a single bonding group are terminated on different LT boards in the DSLAM, one of the LT boards shall be configured to act as the bonding master function for the bonding group, which implies that all bonding related processing such as the distribution of downstream traffic over the different subscriber lines in the bonding group, and the restoration of the upstream traffic stream by storing, ordering and multiplexing the upstream packets received on the different subscriber lines in the bonding group, is done by that LT board. The other LT boards that terminate a subscriber line of that bonding group shall act as bonding slave, which implies that these LT boards simply pass the traffic to and from the LT board that acts as the bonding master function. This being said, each LT board in Fig. 1, i.e. 111 to 118, can be assumed to play the role of bonding master for half of the bonded subscriber lines terminated on that LT board, and the role of bonding slave for the other half of the bonded subscriber lines terminated on that LT board. The bonding functions in Fig. 1 form part of LT boards that can be disabled, removed or replaced. All LT boards that handle traffic of member lines of a single bonding group further have sufficient processing capacity to take over the master bonding function operation in case the one with the current master bonding function is disabled, removed or replaced.

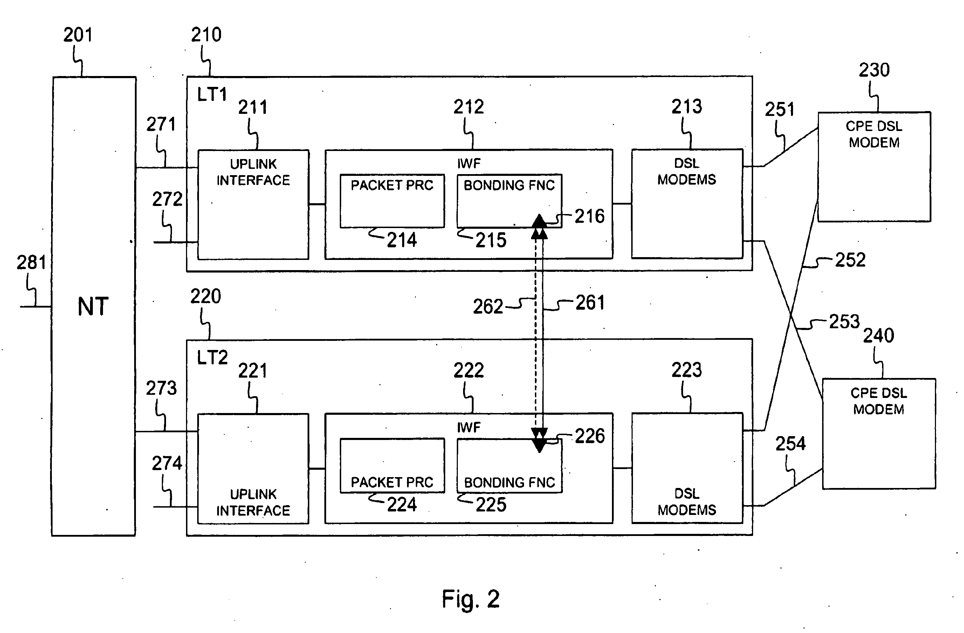

Fig. 2 shows in more detail the functional blocks of a first line termination board, LT1 or 210, and a second line termination board, LT2 or 220, that respectively terminate the two bonded subscriber lines 251 and 252 towards a first CPE DSL modem 230, and that respectively terminate the two bonded subscriber lines 253 and 254 towards a second CPE DSL modem 240. The first line termination board, LT1 or 210, incorporates Central Office DSL modems 213 that serve as subscriber line interface to the DSL lines 251 and 253, Inter-Working Functionality 212 responsible for all packet processing on LT1, and an uplink interface 211 for coupling to a network termination board , NT or 201, or for coupling to plural NT boards in case of NT board redundancy, as is indicated by 271 and 272 in Fig. 2. Similarly, the second line termination board, LT2 or 220, incorporates Central Office DSL modems 223 that serve as subscriber line interface to the DSL lines 252 and 254, Inter-Working Functionality 222 responsible for all packet processing on LT2, and an uplink interface 221 with connectivity to a single NT board 201 or multiple, redundant NT boards as is indicated by 273 and 274. It is noticed here that the LT-NT interconnection is only logically represented by 271, 272, 273 and 274 in Fig. 2. Any person skilled in the art of designing access nodes shall appreciate that the LT-NT interconnection may be realised through a bus, point-to-point, or point-to-multi-point links, passing through one or multiple redundant aggregation switches, abstraction of which is made in Fig. 2 because these aggregation switches and the exact architecture of the LT-NT interconnectivity is irrelevant to the explanation of the current invention. The NT board 201 drawn in Fig. 2 provides network connectivity through its uplink 281, for instance an optical fibre link to an aggregation or edge IP network. Fig. 2 further shows the presence of a packet processor 214 and a bonding function 215 in Inter-Working Function 212 of LT1, and the presence of a packet processor 224 and a bonding function 225 in the Inter-Working Function 222 of LT2. The packet and bonding processor functions can be realized on separate or on a single electronic device. This or these devices can be implemented - in case of multiple devices, independently from each other - as an instruction controlled processor, a programmable logic device (FPGA) or a fixed logic device (ASIC). Bonding function 215 has an interface 216, for instance a FastEthernet interface that is interconnected with a similar interface 226 on bonding function 225. These interfaces 216 and 226 serve as synchronization interfaces to a configuration control channel 261 and as data interfaces to a data channel 262 there between.

Via the configuration control channel 261, the bonding functions 215 and 216 regularly share bonding group configuration data, i.e. all configuration data related to bonding groups that include at least one subscriber line terminated on LT1 and at least one subscriber line terminated on LT2. These data can include the subscriber interface identification, the identification of the member DSL lines on the involved LT boards, the setting of the member DSL line speeds, delays and delay variation tolerances, and other transmission characteristics. One example is the bonding group composed of the two DSL lines 251 and 252. Another example is the bonding group constituted by the two DSL lines 253 and 254. A dedicated software application running on the bonding functions 215 and 225 synchronizes the bonding group configuration data that are shared between the bonding functions 215 and 225 via the configuration control channel 261 and the respective synchronization interfaces 216 and 226. The synchronized bonding configuration data are stored in configuration memories in or near the bonding functions 215 and 225 to enable fast access thereto in case of a failure.

In case of a failure of one of the LT boards, for instance LT2, the bonding functions 215 and 225 will change the role of one of the remaining LT boards, i.e. LT1, for all subscriber line interfaces where the LT board LT2 had the master bonding function, and the latter LT board LT1 has a bonding slave function. This conversion shall use the synchronized bonding configuration data stored in or near bonding function 215 and change the bonding slave function into a bonding master function for those subscriber line interfaces.

In addition to maintaining synchronized bonding configuration data to enable fast handover of the bonding master responsibility in case of an LT board failure, it will be necessary to take measures enabling the new bonding master function to distribute and route the traffic over the remaining bonded subscriber lines on the own LT board, and possibly other still operational LT boards that provide member DSL lines of the affected bonding group(s). The data interface between the new bonding master function and the failing LT board is no longer used.

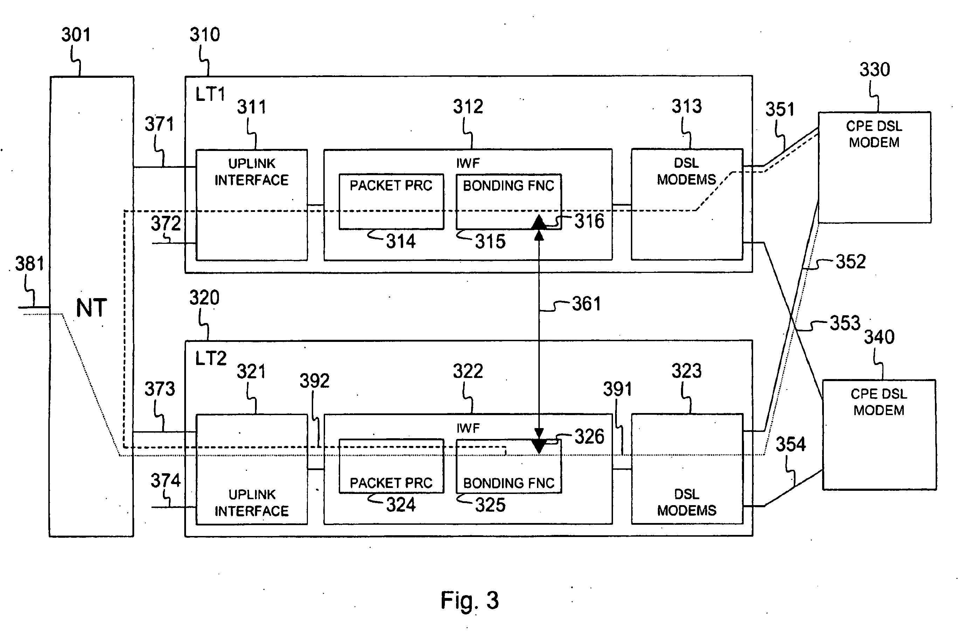

Fig. 3 illustrates the working of a DSLAM similar to the one depicted in Fig. 2 in case of an LT board failure on LT2. The bonding functions 315 and 325 are supposed to have pure synchronization interfaces 316 and 326 which can share bonding configuration data over a dedicated control channel 361. The bonding functions however are not able to directly share data packets through interconnected data interfaces or through a data channel between the synchronization interfaces 316 and 326, like channel 262 shown in Fig. 2. Apart from that difference, the CPE DSL modems 330 and 340, the line termination boards 310 and 320, the CO DSL modems 313 and 323, the Inter-Working Functions 312 and 322, the packet processors 314 and 324, the bonding functions 315 and 325, the uplink interfaces 311 and 321 and the NT board 301 can be assumed to implement functionality similar to their respective counterparts 230, 240, 210, 220, 213, 223, 212, 222, 214, 224, 215, 225, 211, 221 and 201 of Fig. 2. Also the subscriber lines represented by 351, 352, 353, 354, the LT-NT board interconnectivity represented by 371, 372, 373 and 374, and uplink 381 do not basically differ from their respective counterparts 251, 252, 253, 254, 271, 272, 273, 274 and 281 in Fig. 2.

Fig. 3 shows the traffic 391 that passes through subscriber line 352 towards COE DSL modem 330, the latter subscriber line 352 being bonded with subscriber line 351 into a single bonding group. At a point in time where LT board 320 fails, the bonding function 315 that monitors for instance a heartbeat signal that is regularly issued by LT board 320, detects the failure and a handover of the bonding master function from bonding function 325 to bonding function 315 is immediately taking place using the synchronized bonding configuration data that is available in or near bonding function 315. This implementation of the current invention has as main advantage that no additional cabling is required directly between the LT boards, and hence the LT boards hosting subscriber line interfaces that are bonded do not necessarily need to be physically neighbouring on the DSLAM shelf in order to avoid spaghetti wiring.

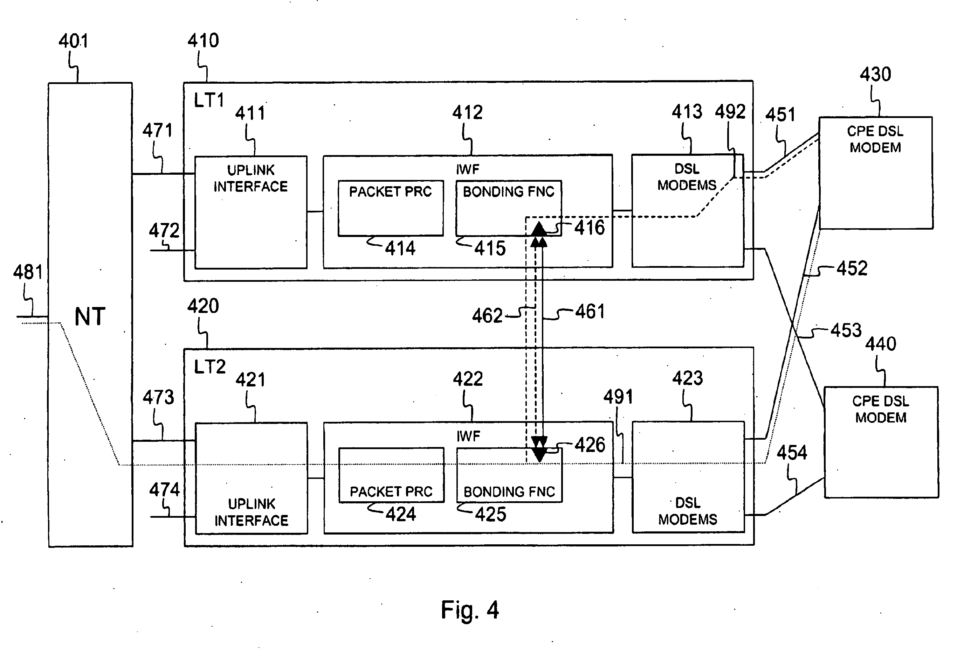

Fig. 4 illustrates the working of another DSLAM wherein an embodiment of the present invention is implemented. The bonding functions 415 and 425 differ from the bonding functions 315 and 325 in Fig. 3 in that the interfaces 416 and 426 comprise synchronization interfaces coupled via a configuration data control channel 461 and data interfaces coupled via a data channel 462. Apart from that difference, the CPE DSL modems 430 and 440, the line termination boards 410 and 420, the CO DSL modems 413 and 423, the Inter-Working Functions 412 and 422, the packet processors 414 and 424, the bonding functions 415 and 425, the uplink interfaces 411 and 421 and the NT board 401 can be assumed to implement functionality similar to their respective counterparts 330, 340, 310, 320, 313, 323, 312, 322, 314, 324, 315, 325, 311, 321 and 301 of Fig. 2 and to their respective counterparts 230, 240, 210, 220, 213, 223, 212, 222, 214, 224, 215, 225, 211, 221 and 201 of Fig. 2. Also the subscriber lines represented by 451, 452, 453, 454, the LT-NT board interconnectivity represented by 471, 472, 473 and 474, and uplink 481 do not basically differ from their respective counterparts 351, 352, 353, 354, 371, 372, 373, 374 and 381 in Fig. 3 or their respective counterparts 251, 252, 253, 254, 271, 272, 273, 274 and 281 in Fig. 2.

The synchronization interfaces and configuration data control channel 461 enable the bonding functions 415 and 425 to regularly share bonding configuration data with respect to the bonding groups that contain at least one subscriber line terminated on LT board 410 and at least one subscriber line terminated on LT board 420. Examples of such bonding groups are the bonding group that consists of the two DSL lines 451 and 452 towards CPE modem 430 and the bonding group that consists of the two DSL lines 453 and 454 towards CPE modem 440. The channel 461 may further be used to regularly send heartbeat signals or variant state of health indications between LT board 410 and LT board 420.

The dotted line 491 shows the path followed by the data packets that are sent to /received from CPE modem 430 through DSL line 452. Upon failure of the LT board 420, the heartbeat pulses will drop as a result of which the bonding functions 415 and 425 become knowledgeable on the LT board failure. Bonding function 415 shall use the available, synchronized bonding configuration data to take over the bonding master function from the line board 420.Because an additional data path connection 462 has to be foreseen between the LT boards 410 and 420 it is preferable that these LT boards occupy neighbouring slots in the DSLAM shelf.

The solution according to the present invention, i.e. the presence of synchronization interfaces for sharing bonding configuration data between LT boards in order to enable a fast switchover of the bonding master function in case of an LT board failure, can be implemented for high-end business subscribers only, or for both business and residential subscribers. The additional cost for the high availability that can be offered through the current invention will be borne only by those subscribers who need it, since they will have to buy a bonding CPE modem, e.g. an ADSL modem that supports DSL line bonding, and will pay for the connectivity to multiple CO ports on the DSLAM. Subscribers who do not need the high availability and/or extra bandwidth of bonded subscriber lines can still be connected efficiently to the DSLAM, using a single DSL line port. No equipment or capacity in the CO shall be left unused for such subscribers. The current invention in other words enables operators to offer enhanced reliability and protection for LT board failures to the high end market at a selective but limited cost increase that can be borne by the high end subscribers only.

Although the above embodiments of the access node according to the present invention represent Digital Subscriber Line Access Multiplexers (DSLAMs), it will be appreciated by any person skilled in the art of designing telecom equipment that any variant access node that supports system based line bonding, i.e. bonding of subscriber lines terminated on different line termination boards, could take benefit of the current invention. Examples of such access nodes are a DLC (Digital Loop Carrier), a Fibre Aggregator, a CMTS (Cable Modem Terminating System), an RU (Remote Unit), an NU (Neighbouring Unit), a mini-DSLAM, etc.

Another remark concerns the choice of the synchronization interface on the bonding functions. Again it must be understood that although the above embodiments have been described with reference to a FastEthernet interface, the invention is not limited to a particular choice for the interface technology. As an alternative to FastEthernet, one could think for instance of a processor interface.

Furthermore, it is noticed that detection of an LT board failure need not necessarily be implemented through the sending of regular heartbeat signals between the LT boards that share bonding groups. Any known mechanism that enables to monitor the state of health of a linecard or certain vital functions thereof such as the powering an serve as an alternative for the heartbeat signals mentioned here above in relation to the described embodiments.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof, as defined in the appended claims. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order.

## Claims

1. An access node comprising a network termination (201; 301; 401), a first line termination (210; 310; 410) and at least a second line termination (220; 320; 420), said first line termination (210; 310; 410) comprising connectivity to a terminal (230; 330; 430) via a first subscriber line (251; 351; 451), and said second line termination (220; 320; 420) comprising connectivity to said terminal (230; 330; 430) via a second subscriber line (252; 352; 452), said first subscriber line (251; 351; 451) and said second subscriber line (252; 352; 452) being member lines of a same bonding group,
**CHARACTERIZED IN THAT**
said first line termination (210, 310, 410) comprises a first bonding function (215; 315; 415) adapted to assume master bonding operation for said bonding group;
said second line termination (220, 320, 420) comprises a second bonding function (225; 325; 425) adapted to assume slave bonding operation for said bonding group;
said first line termination (210; 310; 410) can be disabled, removed or replaced; and
said second bonding function (225: 325; 425) has sufficient processing capacity and is configured to take over said master bonding operation from said first bonding function (215; 315; 415) in case said first line termination (210; 310; 410) is disabled, removed or replaced.

2. An access node according to claim 1,
**CHARACTERIZED IN THAT** said first bonding function (215; 315; 415) and said second bonding function (225; 325; 425) comprise respective synchronization interfaces (216, 226; 316, 326; 416, 426) for detecting failure of said first line termination (210; 310; 410), for sharing bonding configuration data concerning said bonding group, and means for synchronizing a configuration change in said second bonding function (225; 325; 425) with said first line termination (210; 310; 410) being disabled, removed or replaced.

3. An access node according to claim 1,
**CHARACTERIZED IN THAT** said first bonding function (215; 415) and said second bonding function (225; 425) further comprise respective data interfaces (216, 226; 416, 426) for sharing data packets to be transferred to or received from said terminal (230; 430) through member lines of said bonding group of subscriber lines (251, 252; 451, 452) during normal operation.

4. An access node according to claim 1,
**CHARACTERIZED IN THAT** said first bonding function (215; 415) and said second bonding function (225; 425) are adapted to share data packets to be transferred to or received from said terminal (230; 430) through member lines of said bonding group of subscriber lines (251, 252; 451, 452), via the back plane during normal operation.

5. An access node according to claim 2,
**CHARACTERIZED IN THAT** said respective synchronization interfaces (216, 226; 316, 326; 416, 426) are FastEthernet interfaces.

6. An access node according to claim 2,
**CHARACTERIZED IN THAT** said respective synchronization interfaces (216, 226; 316, 326; 416, 426) are processor interfaces.

7. An access node according to claim 2,
**CHARACTERIZED IN THAT** said first bonding function (215; 315; 415) and said second bonding function (225; 325; 425) further comprise respective bonding configuration memories for storing said bonding configuration data received via said synchronization interface (216, 226; 316, 326; 416, 426).

8. An access node according to claim 1,
**CHARACTERIZED IN THAT** said first bonding function (215; 315; 415) and said second bonding function (225; 325; 425) further comprise means for detecting a failure.

9. An access node according to claim 8,
**CHARACTERIZED IN THAT** said means for detecting a failure comprise means for transferring a heartbeat between said first line termination (210; 310; 410) and said second line termination (220; 320; 420).

10. An access node according to claim 9,
**CHARACTERIZED IN THAT** said network termination (301), said first line termination (310) and said second line termination (320) are adapted to transfer said heartbeat via a connection through a backplane.

11. An access node according to claim 9,
**CHARACTERIZED IN THAT** said first line termination (210; 410) and said second line termination (220; 420) are adapted to directly transfer said heartbeat.

12. An access node according to claim 2 and claim 11,
**CHARACTERIZED IN THAT** said first line termination (210; 410) and said second line termination (220; 420) are adapted to transfer said heartbeat via said synchronization interfaces (216, 226; 416, 426).

13. A method for bonding a first subscriber line (251; 351; 451) and at least a second subscriber line (252; 352; 452) into a bonding group, said first subscriber line (251; 351; 451) providing connectivity between a first line termination (210; 310; 410) of an access node and a terminal (230; 330; 430), and said second subscriber line (252; 352; 452) providing connectivity between a second line termination (220; 320; 420) of said access node and said terminal (230; 330; 430),
**CHARACTERIZED IN THAT** said method comprises:
disabling, removing or replacing said first line termination (210; 310; 410) where a first bonding function (215; 315; 415) forms part of, said first bonding function assuming master bonding operation for said bonding group; and
taking over said master bonding operation by a second bonding function (225; 325; 425) that forms part of said second line termination (220; 320; 420) in case said first line termination (210; 310; 410) is disabled, removed or replaced.

14. A method according to claim 13,
**CHARACTERIZED IN THAT** said method further comprises sharing configuration data concerning said bonding group via synchronization interfaces (216, 226; 316, 326; 416, 426) between said first bonding function (215; 315; 415) on said first line termination (210; 310; 410) and said second bonding function (225; 325; 425) on said second line termination (220; 320; 420), and triggering a configuration change in said second bonding function (225; 325; 425) in case said first line termination (210; 310; 410) is disabled, removed or replaced.

## Patentansprüche

1. Ein Zugangsknoten mit einem Netzwerkabschluss (201; 301; 401), einem ersten Leitungsabschluss (210; 310; 410) und mindestens einem zweiten Leitungsabschluss (220; 320; 420), wobei der besagte erste Leitungsabschluss (210; 310; 410) die Konnektivität zu einem Endgerät (230; 330; 430) über einen ersten Teilnehmeranschluss (251; 351; 451) umfasst, und wobei der besagte zweite Leitungsabschluss (220; 320; 420) die Konnektivität zu dem besagten Endgerät (230; 330; 430) über einen zweiten Teilnehmeranschluss (252; 352; 452) umfasst, wobei der besagte erste Teilnehmeranschluss (251; 351; 451) und der besagte zweite Teilnehmeranschluss (252; 352; 452) Member-Anschlüsse einer selben Bonding-Gruppe sind,
**DADURCH GEKENNZEICHNET, DASS**
der besagte erste Leitungsabschluss (210, 310, 410) eine erste Bonding-Funktion (215; 315; 415) umfasst, welche dazu ausgelegt ist, den Master-Bonding-Vorgang für die besagte Bonding-Gruppe zu übernehmen;
wobei der besagte zweite Leitungsabschluss (220, 320, 420) eine zweite Bonding-Funktion (225; 325; 425) umfasst, welche dazu ausgelegt ist, den Slave-Bonding-Vorgang für die besagte Bonding-Gruppe zu übernehmen;
wobei der besagte erste Leitungsabschluss (210; 310; 410) deaktiviert, entfernt oder ersetzt werden kann; und
wobei die besagte zweite Bonding-Funktion (225; 325; 425) über eine ausreichende Verarbeitungskapazität verfügt und dazu konfiguriert ist, den besagten Master-Bonding-Vorgang von der besagten ersten Bonding-Funktion (215; 315; 415) zu übernehmen, wenn der besagte erste Leitungsabschluss (210; 310; 410) deaktiviert, entfernt oder ersetzt wurde.

2. Ein Zugangsknoten nach Anspruch 1,
**DADURCH GEKENNZEICHNET, DASS** die besagte erste Bonding-Funktion (215; 315; 415) und die besagte zweite Bonding-Funktion (225; 325; 425) jeweils Synchronisationsschnittstellen (216, 226; 316, 326; 416, 426) für das Erkennen eines Ausfalls des besagten ersten Leitungsabschlusses (210; 310; 410) und für die gemeinsame Benutzung der Bonding-Konfigurationsdaten, welche die besagte Bonding-Gruppe betreffen, sowie Mittel zur Synchronisation einer Konfigurationsänderung in der besagten zweiten Bonding-Funktion (225; 325; 425), wenn der besagte erste Leitungsabschluss (210; 310; 410) deaktiviert, entfernt oder ersetzt wurde, umfassen.

3. Ein Zugangsknoten nach Anspruch 1,
**DADURCH GEKENNZEICHNET, DASS** die besagte erste Bonding-Funktion (215; 415) und die besagte zweite Bonding-Funktion (225; 425) weiterhin jeweils Datenschnittstellen (216, 226; 416, 426) für die gemeinsame Benutzung von Datenpaketen, die während eines normalen Betriebs durch Member-Anschlüsse der besagten Bonding-Gruppe von Teilnehmeranschlüssen (251, 252; 451, 452) an das besagte Endgerät (230; 430) zu übertragen sind oder von diesem empfangen werden, umfassen.

4. Ein Zugangsknoten nach Anspruch 1,
**DADURCH GEKENNZEICHNET, DASS** die besagte erste Bonding-Funktion (215; 415) und die besagte zweite Bonding-Funktion (225; 425) dazu ausgelegt sind, Datenpakete, die während eines normalen Betriebs durch Member-Anschlüsse der besagten Bonding-Gruppe von Teilnehmeranschlüssen (251, 252; 451, 452) an das besagte Endgerät (230; 430) zu übertragen sind oder von diesem empfangen werden, über die Rückwandplatine gemeinsam zu benutzen.

5. Ein Zugangsknoten nach Anspruch 2,
**DADURCH GEKENNZEICHNET, DASS** die besagten jeweiligen Synchronisationsschnittstellen (216, 226; 316, 326; 416, 426) Fast-Ethernet-Schnittstellen sind.

6. Ein Zugangsknoten nach Anspruch 2,
**DADURCH GEKENNZEICHNET, DASS** die besagten jeweiligen Synchronisationsschnittstellen (216, 226; 316, 326; 416, 426) Prozessorschnittstellen sind.

7. Ein Zugangsknoten nach Anspruch 2,
**DADURCH GEKENNZEICHNET, DASS** die besagte erste Bonding-Funktion (215; 315; 415) und die besagte zweite Bonding-Funktion (225; 325; 425) weiterhin jeweils Bonding-Konfigurationsspeicher zum Speichern der besagten über die besagte Synchronisationsschnittstelle (216, 226; 316, 326; 416, 426) empfangenen Bonding-Konfigurationsdaten umfassen.

8. Ein Zugangsknoten nach Anspruch 1
**DADURCH GEKENNZEICHNET, DASS** die besagte erste Bonding-Funktion (215; 315; 415) und die besagte zweite Bonding-Funktion (225; 325; 425) weiterhin Mittel zum Erkennen eines Ausfalls umfassen.

9. Ein Zugangsknoten nach Anspruch 8,
**DADURCH GEKENNZEICHNET, DASS** die besagten Mittel zum Erkennen eines Ausfalls Mittel zum Übertragen eines Heartbeats zwischen dem besagten ersten Leitungsabschluss (210; 310; 410) und dem besagten zweiten Leitungsabschluss (220; 320; 420) umfassen.

10. Ein Zugangsknoten nach Anspruch 9,
**DADURCH GEKENNZEICHNET, DASS** der besagte Netzwerkabschluss (301), der besagte erste Leitungsabschluss (310) und der besagte zweite Leitungsabschluss (320) dazu ausgelegt sind, den besagten Heartbeat über eine Verbindung durch eine Rückwandplatine zu übertragen.

11. Ein Zugangsknoten nach Anspruch 9,
**DADURCH GEKENNZEICHNET, DASS** der besagte erste Leitungsabschluss (210; 410) und der besagte zweite Leitungsabschluss (220; 420) dazu ausgelegt sind, den besagten Heartbeat direkt zu übertragen.

12. Ein Zugangsknoten nach Anspruch 2 und Anspruch 11,
**DADURCH GEKENNZEICHNET, DASS** der besagte erste Leitungsabschluss (210; 410) und der besagte zweite Leitungsabschluss (220; 420) dazu ausgelegt sind, den besagten Heartbeat über die besagten Synchronisationsschnittstellen (216, 226; 416, 426) zu übertragen.

13. Ein Verfahren zum Bonding eines ersten Teilnehmeranschlusses (251; 351; 451) und mindestens eines zweiten Teilnehmeranschlusses (252; 352; 452) in eine Bonding-Gruppe, wobei der besagte erste Teilnehmeranschluss (251; 351; 451) die Konnektivität zwischen einem ersten Leitungsabschluss (210; 310; 410) eines Zugangsknotens und einem Endgerät (230; 330; 430) bereitstellt, und wobei der besagte zweite Teilnehmeranschluss (252; 352; 452) die Konnektivität zwischen einem zweiten Leitungsabschluss (220; 320; 420) des besagten Zugangsknotens und dem besagten Endgerät (230; 330; 430) bereitstellt,
**DADURCH GEKENNZEICHNET, DASS** das besagte Verfahren umfasst:
Deaktivieren, Entfernen oder Ersetzen des besagten ersten Leitungsabschlusses (210; 310; 410), von welchem eine erste Bonding-Funktion (215; 315; 415) einen Teil bildet, wobei die besagte erste Bonding-Funktion den Master-Bonding-Vorgang für die besagte Bonding-Gruppe übernimmt; und
Übernehmen des besagten Master-Bonding-Vorgangs durch eine zweite Bonding-Funktion (225; 325; 425), welche einen Teil des besagten zweiten Leitungsabschlusses (220; 320; 420) bildet, wenn der besagte erste Leitungsabschluss (210; 310; 410) deaktiviert, entfernt oder ersetzt wurde.

14. Ein Verfahren nach Anspruch 13,
**DADURCH GEKENNZEICHNET, DASS** das besagte Verfahren weiterhin die gemeinsame Benutzung der Konfigurationsdaten, welche die besagte Bonding-Gruppe betreffen, über Synchronisationsschnittstellen (216, 226; 316, 326; 416, 426) zwischen der besagten ersten Bonding-Funktion (215; 315; 415) auf dem besagten ersten Leitungsabschluss (210; 310; 410) und der besagten zweiten Bonding-Funktion (225; 325; 425) auf dem besagten zweiten Leitungsabschluss (220; 320; 420), sowie das Triggern einer Konfigurationsänderung in der besagten zweiten Bonding-Funktion (225 ; 325; 425), wenn der besagte erste Leitungsabschluss (210; 310; 410) deaktiviert, entfernt oder ersetzt wurde, umfasst.

## Revendications

1. Noeud d'accès comprenant une terminaison de réseau (201 ; 301; 401), une première terminaison de ligne (210 ; 310 ; 410) et au moins une deuxième terminaison de ligne (220 ; 320; 420), ladite première terminaison de ligne (210 ; 310 ; 410) comprenant la connectivité à un terminal (230 ; 330; 430) par le biais d'une première ligne d'abonné (251 ; 351; 451) et ladite deuxième terminaison de ligne (220 ; 320 ; 420) comprenant la connectivité audit terminal (230 ; 330 ; 430) par le biais d'une deuxième ligne d'abonné (252 ; 352; 452), ladite première ligne d'abonné (251 ; 351; 451) et ladite deuxième ligne d'abonné (252 ; 352; 452) étant des lignes appartenant à un même groupe de liaison,
**CARACTERISE EN CE QUE**
ladite première terminaison de ligne (210 ; 310 ; 410) comprend une première fonction de liaison (215 ; 315 ; 415) adaptée pour accomplir l'opération de liaison maître pour ledit groupe de liaison ;
ladite deuxième terminaison de ligne (220 ; 320 ; 420) comprend une deuxième fonction de liaison (225 ; 325; 425) adaptée pour accomplir l'opération de liaison esclave pour ledit groupe de liaison ;
ladite première terminaison de ligne (210 ; 310 ; 410) peut être désactivée, supprimée ou remplacée ; et
ladite deuxième fonction de liaison (225 ; 325 ; 425) possède suffisamment de capacité de traitement et est configurée pour prendre en charge ladite opération de liaison maître de ladite première fonction de liaison (215 ; 315 ; 415) dans le cas où ladite première terminaison de ligne (210 ; 310 ; 410) est désactivée, supprimée ou remplacée.

2. Noeud d'accès selon la revendication 1,
**CARACTERISE EN CE QUE** ladite première fonction de liaison (215 ; 315 ; 415) et ladite deuxième fonction de liaison (225 ; 325 ; 425) comprennent des interfaces de synchronisation (216, 226 ; 316, 326; 416, 426) respectives pour détecter une défaillance de ladite première terminaison de ligne (210 ; 310 ; 410), pour partager des données de configuration de liaison concernant ledit groupe de liaison et des moyens pour synchroniser un changement de configuration dans ladite deuxième fonction de liaison (225 ; 325; 425), ladite première terminaison de ligne (210 ; 310 ; 410) étant désactivée, supprimée ou remplacée.

3. Noeud d'accès selon la revendication 1,
**CARACTERISE EN CE QUE** ladite première fonction de liaison (215 ; 415) et ladite deuxième fonction de liaison (225 ; 425) comprennent en outre des interfaces de données (216, 226 ; 416, 426) respectives pour partager des paquets de données à transférer vers ledit ou à recevoir dudit terminal (230 ; 430) à travers les lignes appartenant audit groupe de liaison de lignes d'abonné (251, 252 ; 451, 452) pendant le fonctionnement normal.

4. Noeud d'accès selon la revendication 1,
**CARACTERISE EN CE QUE** ladite première fonction de liaison (215 ; 415) et ladite deuxième fonction de liaison (225 ; 425) sont adaptées pour partager les paquets de données à transférer vers ledit ou à recevoir dudit terminal (230; 430) à travers les lignes appartenant audit groupe de liaison de lignes d'abonné (251, 252; 451, 452) par le biais de la carte de fond de panier pendant le fonctionnement normal.

5. Noeud d'accès selon la revendication 2,
**CARACTERISE EN CE QUE** lesdites interfaces de synchronisation (216, 226; 316, 326; 416, 426) respectives sont des interfaces FastEthernet.

6. Noeud d'accès selon la revendication 2,
**CARACTERISE EN CE QUE** lesdites interfaces de synchronisation (216, 226; 316, 326; 416, 426) respectives sont des interfaces de processeur.

7. Noeud d'accès selon la revendication 2,
**CARACTERISE EN CE QUE** ladite première fonction de liaison (215 ; 315 ; 415) et ladite deuxième fonction de liaison (225 ; 325; 425) comprennent en outre des mémoires de configuration de liaison respectives pour stocker lesdites données de configuration liaison reçues par le biais de ladite interface de synchronisation (216, 226 ; 316, 326; 416, 426).

8. Noeud d'accès selon la revendication 1,
**CARACTERISE EN CE QUE** ladite première fonction de liaison (215 ; 315 ; 415) et ladite deuxième fonction de liaison (225 ; 325; 425) comprennent en outre des moyens pour détecter une défaillance.

9. Noeud d'accès selon la revendication 8,
**CARACTERISE EN CE QUE** lesdits moyens pour détecter une défaillance comprennent des moyens pour transférer un signal d'activité entre ladite première terminaison de ligne (210 ; 310 ; 410) et ladite deuxième terminaison de ligne (220 ; 320; 420).

10. Noeud d'accès selon la revendication 9,
**CARACTERISE EN CE QUE** ladite terminaison de réseau (301), ladite première terminaison de ligne (310) et ladite deuxième terminaison de ligne (320) sont adaptées pour transférer ledit signal d'activité par le biais d'une connexion à travers une carte de fond de panier.

11. Noeud d'accès selon la revendication 9,
**CARACTERISE EN CE QUE** ladite première terminaison de ligne (210 ; 410) et ladite deuxième terminaison de ligne (220 ; 420) sont adaptées pour transférer directement ledit signal d'activité.

12. Noeud d'accès selon la revendication 2 et la revendication 11,
**CARACTERISE EN CE QUE** ladite première terminaison de ligne (210 ; 410) et ladite deuxième terminaison de ligne (220 ; 420) sont adaptées pour transférer ledit signal d'activité par le biais desdites interfaces de synchronisation (216, 226; 416, 426).

13. Procédé pour lier une première ligne d'abonné (251 ; 351; 451) et au moins une deuxième ligne d'abonné (252 ; 352; 452) dans un groupe de liaison, ladite première ligne d'abonné (251 ; 351; 451) réalisant la connectivité entre une première terminaison de ligne (210 ; 310 ; 410) d'un noeud d'accès et un terminal (230 ; 330; 430) et ladite deuxième ligne d'abonné (252 ; 352; 452) réalisant la connectivité entre une deuxième terminaison de ligne (220; 320; 420) dudit noeud d'accès et ledit terminal (230 ; 330; 430),
**CARACTERISE EN CE QUE** ledit procédé comprend :
désactivation, suppression ou remplacement de ladite première terminaison de ligne (210; 310 ; 410) là où une première fonction de liaison (215 ; 315 ; 415) en fait partie, ladite première fonction de liaison accomplissant l'opération de liaison maître pour ledit groupe de liaison ; et
prise en charge de ladite opération de liaison maître par une deuxième fonction de liaison (225 ; 325; 425) qui fait partie de ladite deuxième terminaison de ligne (220 ; 320; 420) dans le cas où ladite première terminaison de ligne (210 ; 310 ; 410) est désactivée, supprimée ou remplacée.

14. Procédé selon la revendication 13,
**CARACTERISE EN CE QUE** ledit procédé comprend en outre le partage des données de configuration concernant ledit groupe de liaison par le biais d'interfaces de synchronisation (216, 226 ; 316, 326 ; 416, 426) entre ladite première fonction de liaison (215 ; 315 ; 415) sur ladite première terminaison de ligne (210 ; 310 ; 410) et ladite deuxième fonction de liaison (225 ; 325; 425) sur ladite deuxième terminaison de ligne (220 ; 320; 420) et le déclenchement d'un changement de configuration dans ladite deuxième fonction de liaison (225 ; 325; 425) dans le cas où ladite première terminaison de ligne (210 ; 310 ; 410) est désactivée, supprimée ou remplacée.
